# EUROPEAN PATENT APPLICATION

(11) **EP 4 456 101 A1**
(43) Date of publication of application: **30.10.2024**
(21) Application number: 23194495.0
(22) Date of filing: 31.08.2023
(51) Int. Cl.: H01H 1/38

(54) **CONTACTOR AND BATTERY PACK INCLUDING THE SAME**

(30) Priority: 25.04.2023 KR 20230054246
(71) Applicant: Samsung SDI Co., Ltd., Yongin-si, Gyeonggi-do 17084 (KR)
(72) Inventor: JANG, Sanghun, 17084 Yongin-si, Gyeonggi-do (KR)
(74) Representative: Gulde & Partner

(57) **Abstract**

A contactor (30, 200, 300) is disclosed, the contactor (30, 200, 300) includes: a first fixing contact terminal (210, 220, 310, 320) electrically connected to an energy storage device, a second fixing contact terminal (210, 220, 310, 320) electrically connected to a load (2), and a moving contact terminal (230, 330) coupled to or separated from the first fixed contact terminal (210, 220, 310, 320) and the second fixed contact terminal (210, 220, 310, 320) according to a control signal, the first fixed contact terminal (210, 220, 310, 320) and the second fixed contact terminal (210, 220, 310, 320) are coupled to the moving contact terminal (230, 330) by a male-female coupling structure.

## Description

### Field

The present disclosure relates to a contactor and a battery pack including the same, and more particularly, to a contactor that can maintain a closing state of the contactor even if a low voltage is supplied to the contactor or power supply is cut off to the contactor while the contactor is closed. In addition, the present disclosure relates to use of the contactor in a battery pack.

### Description of the Related Art

A contactor is a device that serves as a switch to supply the high voltage of the battery inside the battery pack to the electric vehicle. A contactor may include two fixing contact terminals and one moving contact terminal inside it, and the moving contact terminal can be operated upward by electromotive force applied to the coil. Commands operated at this time may be performed by a battery management system (BMS), and power applied to the coil may be supplied by a lead acid battery.

If the BMS is reset for some reason while the vehicle is driving, the contactor is momentarily opened, and in this case, the vehicle cannot be driven. Accordingly, the battery pack may be installed with a retention circuit to keep a close state of the contactor even in a resetting situation of the BMS for a predetermined time. However, if the power of the leadacid battery that keeps the close state of the contactor during this retention circuit operation is unstable or decreases, the power that supports the moving contact terminal of the contactor decreases, the fixing contact terminals and the moving contact terminal are separated, and power may be cut off. As a result, driving of the vehicle becomes impossible.

### SUMMARY

At least one embodiment of the embodiments provides a contactor and a battery pack including the same capable of maintaining a closing state of the contactor even if a low voltage is supplied to the contactor or power supply is cut off to the contactor while the contactor is closed.

A contactor according to an embodiment includes: a first fixing contact terminal electrically connected to an energy storage device; a second fixing contact terminal electrically connected to a load; and a moving contact terminal coupled to or separated from the first fixed contact terminal and the second fixed contact terminal according to a control signal, wherein the first fixed contact terminal and the second fixed contact terminal are coupled to the moving contact terminal by a male-female coupling structure.

The first fixing contact terminal and the second fixing contact terminal may include fitting grooves formed to accommodate the moving contact terminal in a longitudinal direction of the moving contact terminal.

The moving contact terminal may include a first protrusion and a second protrusion protruding to correspond to positions of the first fixing contact terminal and the second fixing contact terminal, respectively, and the first fixing contact terminal and the second fixing contact terminal each may include a fitting groove formed to accommodate the first and second protrusions therein.

The first fixing contact terminal and the second fixing contact terminal may include a first protrusion and a second protrusion protruding, respectively, and the moving contact terminal may include a first fitting groove and a second fitting groove formed to accommodate the first protrusion and the second protrusion in correspondence to positions of the first protrusion and the second protrusion, respectively.

The first fixing contact terminal and the second fixing contact terminal may include a first protrusion and a second protrusion protruding, respectively, and the moving contact terminal may include one fitting groove formed to accommodate the first protrusion and the second protrusion in a longitudinal direction.

The control signal may include a contactor open signal and a contactor close signal, and the contactor may further include a first contactor coil configured to move the moving contact terminal to be coupled with the first fixing contact terminal and the second fixing contact terminal according to the contactor close signal; and a second contactor coil configured to move the moving contact terminal to be separated from the first fixing contact terminal and the second fixing contact terminal according to the contactor open signal.

The moving contact terminal may be configured to move in a vertical direction and may be coupled to or separated from the first fixing contact terminal and the second fixing contact terminal.
the moving contact terminal may be configured to move in a horizontal direction and may be coupled to or separated from the first fixing contact terminal and the second fixing contact terminal.

A battery pack according to an embodiment includes a battery module, a contactor connected between the battery module and a load and including any one of the above features, and a battery management system configured to control the contactor based on the state of the battery module.

### BRIEF DESCRIPTION OF THE DRAWINGS

FIG. 1 is a diagram schematically illustrating a battery pack according to an exemplary embodiment.
FIG. 2 is a diagram schematically illustrating an example of a general contactor.
FIG. 3 is a diagram schematically illustrating an example of a contactor according to an embodiment.
FIG. 4 to FIG. 7 are diagrams each showing an example of a male-female coupling structure of fixing contact terminals and a moving contact terminal shown in FIG. 3.

### DETAILED DESCRIPTION

Hereinafter, embodiments of the disclosure will be described in detail with reference to the attached drawings so that a person of ordinary skill in the art may easily implement the disclosure. As those skilled in the art would realize, the described embodiments may be modified in various different ways, all without departing from the scope of the disclosure. The drawings and description are to be regarded as illustrative in nature and not restrictive. Like reference numerals designate like elements throughout the specification. In the flowchart described with reference to the drawings in this specification, the order of operations may be changed, several operations may be merged, some operations may be divided, and specific operations may not be performed.

Throughout the specification and claims, when a part is referred to "include" a certain element, it may mean that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

Furthermore, when a component is referred to be "connected" with another component, it includes not only the case where two components are "directly connected" but also the case where two components are "indirectly or non-contactedly connected" with another component interposed therebetween, or the case where two components are "electrically connected." On the other hand, when an element is referred to as "directly connected" to another element, it should be understood that no other element exists in the middle.

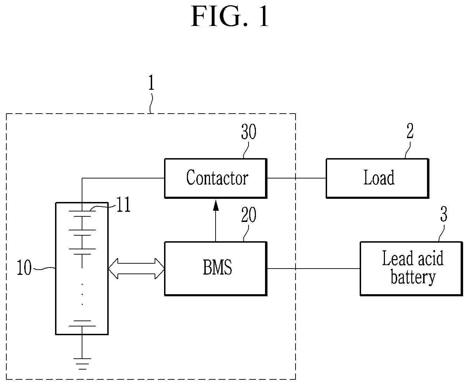

FIG. 1 is a diagram schematically illustrating a battery pack according to an exemplary embodiment.

Referring to FIG. 1, the battery pack 1 may be mounted in various power devices that use electrical energy stored in the battery pack 1, such as an electric vehicle.

The battery pack 1 may include at least one battery module 10, a battery management system (BMS) 20 and a contactor 30.

The at least one battery module 10 may include a plurality of battery cells 11 electrically connected to each other in series and/or parallel.

The BMS 20 may control and manage overall operations of the battery pack 1. The BMS 20 monitors the overall state (e.g., voltage, current, and temperature) of the battery module 10 and the battery cells 11 included in the battery module 10, and perform various control functions (e.g., charging, discharging, balancing) for adjusting the state of the battery module 10 and the battery cells 11.

The contactor 30 may be connected between the positive terminal of the battery module 10 and the load 2, and operate by receiving power from the lead acid battery 3.

The contactor 30 may be switched to an open state or a close state according to a control signal from the BMS 20. For example, the contactor 30 may be switched to an open state according to an open control signal from the BMS 20. If the contactor 30 is in an open state, no electrical connection between the battery module 10 and the load 2, and power from the battery module 10 is not supplied to the load 2. In addition, the contactor 30 may be switched to a close state according to the close control signal of the BMS 20. When the contactor 30 is in a close state, the battery module 10 and the load 2 are electrically connected, and power from the battery module 10 may be supplied to the load 2.

The lead acid battery 3 may be a 12V battery. The lead acid battery 3 may be, for example, a battery used in vehicles.

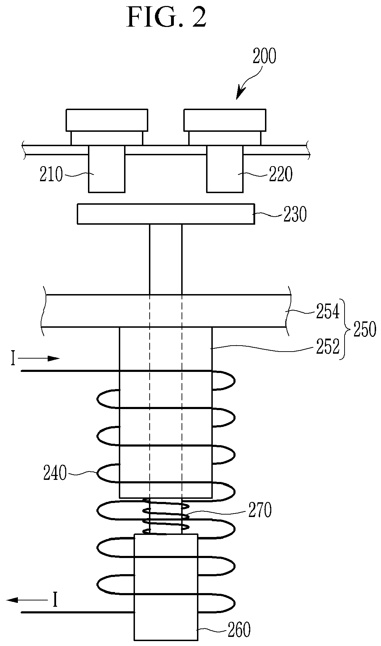

FIG. 2 is a diagram schematically illustrating an example of a general contactor.

Referring to FIG. 2, in general, the contactor 200 may include two fixing contact terminals 210 and 220, a moving contact terminal 230, and a contactor coil 240.

The fixing contact terminal 210 may be electrically connected to the positive terminal of the battery module 10.

The fixing contact terminal 220 may be electrically connected to the load 2.

The contactor coil 240 may be mounted in a form surrounding the first fixing jig 252 and the moving structure 260. The fixing jig 250 may include a first fixing jig 252 and a second fixing jig 254. The first fixing jig 252 and the second fixing jig 254 have holes formed therein, respectively, so that the moving structure 260 can move in a vertical direction through the holes. The first fixing jig 252 and the second fixing jig 254 are coupled, and the second fixing jig 254 may be fixed to one side inside the housing surrounding the contactor 200 from the outside. One side of the moving structure 260 may be coupled to the moving contact terminal 230.

If power is supplied to the contactor coil 240 according to the contactor close signal from the BMS 20, a current I may flow through the contactor coil 240. Due to this, while the moving structure 260 moves upward by the principle of an electromagnet following Fleming's right-hand rule, the fixing contact terminals 210 and 220 and the moving contact terminal 230 are coupled to each other, so that the contactor 200 is in a close state. Conversely, if the power supply to the contactor coil 240 is cut off according to the contactor open signal from the BMS 20, the current I does not flow through the contactor coil 240. Then, while the moving structure 260 moves downward by the force of the elastic spring 270, the fixing contact terminals 210 and 220 and the moving contact terminal 230 may be separated and the contactor 200 is in an open state.

Meanwhile, while the contactor 200 is in a close state by applying the contactor close signal from the BMS 20, the lead acid battery 3 may be discharged and become a low voltage of several volts. In this case, if the force pushing the moving structure 260 upward becomes weaker and the force of the elastic spring 270 becomes stronger, the fixing contact terminals 210 and 220 and the moving contact terminal 230 may be separated and the contactor 200 may be in an open state. In this case, power is not supplied to the load 2, and driving is impossible in the case of an electric vehicle.

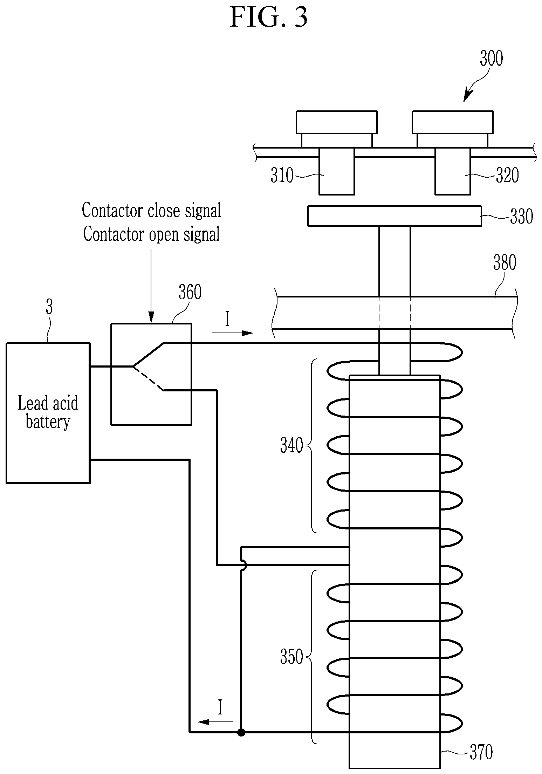

According to the present disclosure, if the contactor 30 is in the close state according to the contactor close signal from the BMS 20, the contactor 30 may be arranged such that the contactor 30 does not become open even if the lead acid battery 3 is discharged and a low voltage is applied to the contactor coil. Such a contactor will be described in detail with reference to FIG. 3.

FIG. 3 is a diagram schematically illustrating an example of a contactor according to an embodiment.

Referring to FIG. 3, the contactor 300 may include two fixing contact terminals 310 and 320, a moving contact terminal 330, and two contactor coils, that is, an upper contactor coil 340 and a lower contactor coil 350. Also, the contactor 300 may further include a switch 360.

One terminal of the switch 360 may be connected to the positive terminal of the lead acid battery 3. The other terminal of switch 360 may be connected to one terminal of the upper contactor coil 340 or one terminal of the lower contactor coil 350. The other terminal of the upper contactor coil 340 and the other terminal of the lower contactor coil 350 may be connected to the negative terminal of the lead acid battery 3.

The upper contactor coil 340 and the lower contactor coil 350 may be wound around a moving structure 370. The upper contactor coil 340 may be wound on top of the moving structure 370 and the lower contactor coil 350 may be wound on the bottom of the moving structure 370. Winding directions of the upper contactor coil 340 and the lower contactor coil 350 may be in opposite directions.

The moving structure 370 may move in a vertical direction through the insertion hole of the fixing jig 380 according to power applied to the upper contactor coil 340 or the lower contactor coil 350.

The switch 360 may connect the other terminal of the switch 360 to one end of the upper contactor coil 340 according to a contactor close signal from the BMS 20. That is, the switch 360 may apply power from the lead acid battery (3 in FIG. 1) to the upper contactor coil 340 according to the contactor close signal from the BMS (20 in FIG. 1).

The switch 360 may connect the other terminal of the switch 360 to one end of the lower contactor coil 350 according to the contactor open signal from the BMS 20. That is, the switch 360 may apply power from the lead acid battery 3 to the lower contactor coil 350 according to the contactor open signal.

If power is supplied to the upper contactor coil 340 from a lead acid battery 3, a current I may flow through the upper contactor coil 340, and thus the moving structure 370 may move upward by the principle of an electromagnet following Fleming's right-hand rule, the fixing contact terminals 310 and 320 and the moving contact terminal 330 may be coupled to each other, so that the contactor 300 is in a close state.

In contrast, if power is supplied to the lower contactor coil 350 from a lead acid battery 3, a current I may flow through the lower contactor coil 350, and accordingly, the moving structure 370 may move downward by the principle of an electromagnet following Fleming's right-hand rule, the fixing contact terminals 310 and 320 and the moving contact terminal 330 may be separated to each other, so that the contactor 300 is in an open state.

In this way, the contactor 300 according to one embodiment uses the lower contactor coil 350 wound in the opposite direction to the upper contactor coil 340, thereby the elastic spring 270 shown in FIG 2 can be removed.

Furthermore, the fixing contact terminals 310 and 320 and the moving contact terminal 330 of the contactor 300 according to an embodiment may have a male and female coupling structure. As the fixing contact terminals 310 and 320 and the moving contact terminal 330 have a male and female coupling structure, if the contactor close signal from the BMS 20 is applied, the fixing contact terminals 310 and 320 and the moving contact terminal 330 can maintain a more stable and robust coupling state.

That is, if the BMS 20 commands the contactor to close, even if the lead acid battery 3 is discharged and a low voltage is applied to the contactor coil 340, and the force pushing the moving structure 370 upward becomes weak, the coupled state between the fixing contact terminals 310 and 320 and the moving contact terminal 330 may be maintained by the force of the physical male-female coupling between the fixing contact terminals 310 and 320 and the moving contact terminal 330.

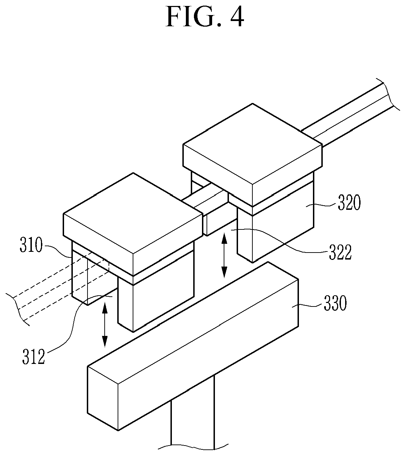

FIG. 4 to FIG. 7 are diagrams each showing an example of a male-female coupling structure of fixing contact terminals and a moving contact terminal shown in FIG. 3.

Referring to FIG. 4, inside the fixing contact terminals 310 and 320, fitting grooves 312 and 322, which are accommodating spaces having a depth capable of accommodating the moving contact terminal 330, may be formed in the longitudinal direction of the moving contact terminal 330.

The moving contact terminal 330 may have a width that can fit into the fitting grooves 312 and 322 formed in the fixing contact terminals 310 and 320.

According to the contactor close signal, the moving contact terminal 330 may be inserted into the fitting grooves 312 and 322 formed in the fixing contact terminals 310 and 320, and the fixing contact terminals 310 and 320 and the moving contact terminal 330 may be coupled (connected).

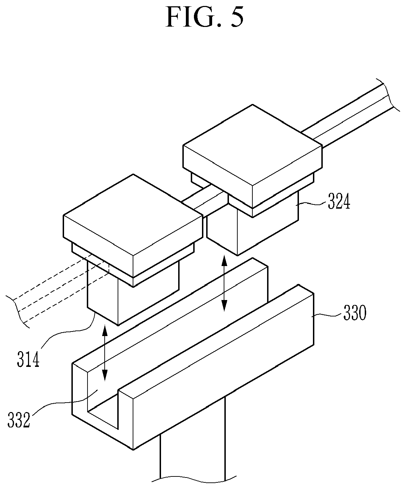

Referring to FIG. 5, unlike FIG. 4, in the moving contact terminal 330, a fitting groove 332, which is an accommodation space, may be formed in the longitudinal direction, and the fixing contact terminals 310 and 320 may have protrusions 314 and 324 protruding in the vertical direction so as to be inserted into the fitting groove 332. Widths of the protrusions 314 and 324 may be the same as those of the fitting groove 332.

In response to the contactor close signal, the protrusions 314 and 324 respectively formed on the fixing contact terminals 310 and 320 may be inserted into the fitting groove 332 formed on the moving contact terminal 330, and the fixing contact terminals 310 and 320 and the moving contact terminal 330 may be coupled (connected).

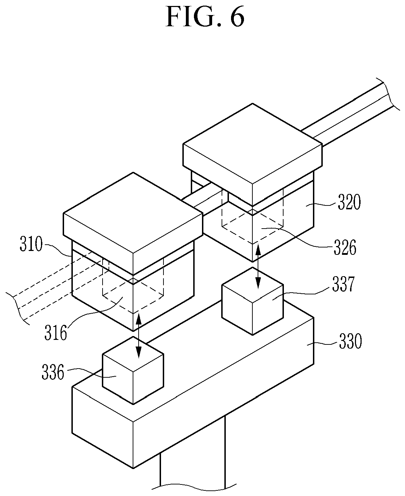

Next, referring to FIG. 6, the fixing contact terminals 310 and 320 may have fitting grooves 316 and 326, respectively.

The moving contact terminal 330 may have projections 336 and 337 protruding in a vertical direction corresponding to positions of the fitting grooves 316 and 326 formed in the fixing contact terminals 310 and 320.

In response to the contactor close signal, the protrusions 336 and 337 of the moving contact terminal 330 may be inserted into the fitting grooves 316 and 326 of the fixing contact terminals 310 and 320, and the fixing contact terminals 310 and 320 and the moving contact terminal 330 may be coupled (connected).

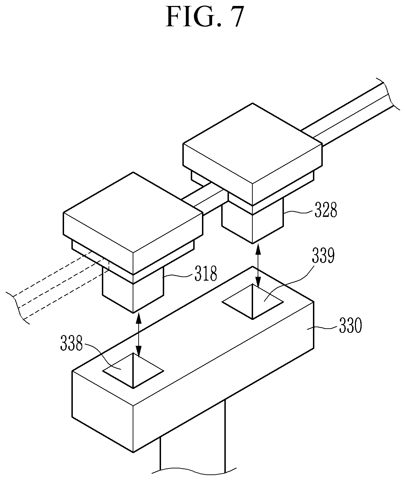

Meanwhile, referring to FIG. 7, unlike FIG. 6, the fixing contact terminals 310 and 320 may have protrusions 318 and 328 protruding in a vertical direction, respectively, and the moving contact terminal 330 may have fitting grooves 338 and 339 formed corresponding to the positions of the protrusions 318 and 328 so that the protrusions 318 and 328 may be inserted.

In response to the contactor close signal, the protrusions 318 and 328 formed on the fixing contact terminals 310 and 320 may be inserted into the fitting grooves 338 and 339 of the moving contact terminal 330, and the fixing contact terminals 310 and 320 and the moving contact terminal 330 may be coupled (connected).

In the male-female coupling structure of the fixing contact terminals 310 and 320 and the moving contact terminal 330 described based on FIGS. 4 to 7, upon contactor close signal of the BMS 20, even if even if the lead acid battery 3 is discharged and a low voltage is applied to the contactor coil 340, the coupled (closed) state between the fixing contact terminals 310 and 320 and the moving contact terminal 330 may be maintained.

In addition, the male and female coupling structure of the fixing contact terminals 310 and 320 and the moving contact terminal 330 respectively described based on FIGS. 4 to 7 may be applied to the vertical driving method by the contactor coils 340 and 350 described above, but may also be applied to the contactor having horizontal driving type that operates on the principle that the moving contact terminal 330 moves in the horizontal direction and may be coupled to or separated from the fixing contact terminals 310 and 320 according to the contactor close signal and the contactor open signal.

According to at least one embodiment of the embodiments, even if a lead acid battery supplying power to the contactor is discharged or the lead acid battery is unstable, a close state of the contactor terminal may be maintained. Due to this, it is possible to continuously supply power from the battery pack to the load, and also prevent arcing by instantaneous opening and closing of the contactor.

In addition, if the fixing contact terminals and the moving contact terminal are weakly welded due to arcing inside the contactor, the weld may be released by a downward pulling force if a contactor open command is forcibly performed.

Although the embodiments of the present invention have been described in detail above, the scope of the present invention is not limited thereto, and various modifications and improvements made by those skilled in the art using the basic concept of the present invention defined in the following claims are also included in the scope of the present invention.

### <Description of symbols>

1: battery pack
2: load
3: lead acid battery
10: battery module
20: BMS
30, 200, 300: contactor
210, 220, 310, 320: fixing contact terminal
230: 330: moving contact terminal
340: upper contactor coil
350: lower contactor coil
360: switch
370: moving structure
380: fixed jig

## Claims

1. A contactor (30, 200, 300) comprising:
a first fixing contact terminal (210, 220, 310, 320) electrically connected to an energy storage device;
a second fixing contact terminal (210, 220, 310, 320) electrically connected to a load (2); and
a moving contact terminal (230, 330) coupled to or separated from the first fixed contact terminal and the second fixed contact terminal according to a control signal,
wherein the first fixed contact terminal and the second fixed contact terminal are coupled to the moving contact terminal (230, 330) by a male-female coupling structure.

2. The contactor (30, 200, 300) as claimed in claim 1, wherein
the first fixing contact terminal (210, 220, 310, 320) and the second fixing contact terminal (210, 220, 310, 320) comprises fitting grooves formed to accommodate the moving contact terminal (230, 330) in a longitudinal direction of the moving contact terminal (230, 330).

3. The contactor (30, 200, 300) as claimed in claim 1, wherein
the moving contact terminal (230, 330) comprises a first protrusion and a second protrusion protruding to correspond to positions of the first fixing contact terminal (210, 220, 310, 320) and the second fixing contact terminal (210, 220, 310, 320), respectively, and
the first fixing contact terminal (210, 220, 310, 320) and the second fixing contact terminal (210, 220, 310, 320) each comprise a fitting groove formed to accommodate the first and second protrusions therein.

4. The contactor (30, 200, 300) as claimed in claim 1, wherein
the first fixing contact terminal (210, 220, 310, 320) and the second fixing contact terminal (210, 220, 310, 320) comprise a first protrusion and a second protrusion, respectively, and
the moving contact terminal (230, 330) comprises a first fitting groove and a second fitting groove formed to accommodate the first protrusion and the second protrusion in correspondence to positions of the first protrusion and the second protrusion, respectively.

5. The contactor (30, 200, 300) as claimed in claim 1, wherein
the first fixing contact terminal (210, 220, 310, 320) and the second fixing contact terminal (210, 220, 310, 320) comprise a first protrusion and a second protrusion, respectively, and
the moving contact terminal (230, 330) comprises one fitting groove formed to accommodate the first protrusion and the second protrusion in a longitudinal direction.

6. The contactor (30, 200, 300) as claimed in any of claims 1-5, wherein
the control signal comprises a contactor open signal and a contactor close signal, and
the contactor (30, 200, 300) further comprises:
a first contactor coil configured to move the moving contact terminal (230, 330) to be coupled with the first fixing contact terminal (210, 220, 310, 320) and the second fixing contact terminal (210, 220, 310, 320) according to the contactor close signal; and
a second contactor coil configured to move the moving contact terminal (230, 330) to be separated from the first fixing contact terminal (210, 220, 310, 320) and the second fixing contact terminal (210, 220, 310, 320) according to the contactor open signal.

7. The contactor (30, 200, 300) as claimed in any of claims 1-6, wherein
the moving contact terminal (230, 330) is configured to move in a vertical direction and is coupled to or separated from the first fixing contact terminal (210, 220, 310, 320) and the second fixing contact terminal (210, 220, 310, 320).

8. The contactor (30, 200, 300) as claimed in any of claims 1-7, wherein
the moving contact terminal (230, 330) is configured to move in a horizontal direction and is coupled to or separated from the first fixing contact terminal (210, 220, 310, 320) and the second fixing contact terminal (210, 220, 310, 320).

9. A battery pack (1) comprising:
a battery module (10);
a contactor (30, 200, 300) connected between the battery module (10) and a load (2), according to any of claims 1-8; and
a battery management system configured to control the contactor (30, 200, 300) based on a state of the battery module (10).

10. Use of the contactor according to any of claims 1-8 in the battery pack (1) according to claim 9.

## Amended claims

### Amended claims in accordance with Rule 137(2) EPC.

1. A contactor (30, 200, 300) comprising:
a first fixing contact terminal (210, 220, 310, 320) electrically connectable to an energy storage device;
a second fixing contact terminal (210, 220, 310, 320) electrically connectable to a load (2); and
a moving contact terminal (230, 330) coupled to or separated from the first fixed contact terminal and the second fixed contact terminal according to a control signal,
wherein the first fixed contact terminal and the second fixed contact terminal are couplable to the moving contact terminal (230, 330) by a male-female coupling structure,
wherein
the control signal comprises a contactor open signal and a contactor close signal, and
the contactor (30, 200, 300) further comprises:
a first contactor coil configured to move the moving contact terminal (230, 330) to be coupled with the first fixing contact terminal (210, 220, 310, 320) and the second fixing contact terminal (210, 220, 310, 320) by the male-female coupling structure according to the contactor close signal, so that if a force pushing a moving structure (370) is insufficient to maintain a coupled state between the first and second fixing contact terminals (210, 220, 310, 320) and the moving contact terminal (230, 330), the coupled state is maintained by a force of a physical male-female coupling between the first and second fixing contact terminals (210, 220, 310, 320) and the moving contact terminal (230, 330); and
a second contactor coil configured to move the moving contact terminal (230, 330) to be separated from the first fixing contact terminal (210, 220, 310, 320) and the second fixing contact terminal (210, 220, 310, 320) according to the contactor open signal.

2. The contactor (30, 200, 300) as claimed in claim 1, wherein
the first fixing contact terminal (210, 220, 310, 320) and the second fixing contact terminal (210, 220, 310, 320) comprises fitting grooves formed to accommodate the moving contact terminal (230, 330) in a longitudinal direction of the moving contact terminal (230, 330).

3. The contactor (30, 200, 300) as claimed in claim 1, wherein
the moving contact terminal (230, 330) comprises a first protrusion and a second protrusion protruding to correspond to positions of the first fixing contact terminal (210, 220, 310, 320) and the second fixing contact terminal (210, 220, 310, 320), respectively, and
the first fixing contact terminal (210, 220, 310, 320) and the second fixing contact terminal (210, 220, 310, 320) each comprise a fitting groove formed to accommodate the first and second protrusions therein.

4. The contactor (30, 200, 300) as claimed in claim 1, wherein
the first fixing contact terminal (210, 220, 310, 320) and the second fixing contact terminal (210, 220, 310, 320) comprise a first protrusion and a second protrusion, respectively, and
the moving contact terminal (230, 330) comprises a first fitting groove and a second fitting groove formed to accommodate the first protrusion and the second protrusion in correspondence to positions of the first protrusion and the second protrusion, respectively.

5. The contactor (30, 200, 300) as claimed in claim 1, wherein
the first fixing contact terminal (210, 220, 310, 320) and the second fixing contact terminal (210, 220, 310, 320) comprise a first protrusion and a second protrusion, respectively, and
the moving contact terminal (230, 330) comprises one fitting groove formed to accommodate the first protrusion and the second protrusion in a longitudinal direction.

6. The contactor (30, 200, 300) as claimed in any of claims 1-5, wherein
the moving contact terminal (230, 330) is configured to move in a vertical direction and is coupled to or separated from the first fixing contact terminal (210, 220, 310, 320) and the second fixing contact terminal (210, 220, 310, 320).

7. The contactor (30, 200, 300) as claimed in any of claims 1-6, wherein
the moving contact terminal (230, 330) is configured to move in a horizontal direction and is coupled to or separated from the first fixing contact terminal (210, 220, 310, 320) and the second fixing contact terminal (210, 220, 310, 320).

8. A battery pack (1) comprising:
a battery module (10);
a contactor (30, 200, 300) connectable between the battery module (10) and a load (2), according to any of claims 1-7; and
a battery management system configured to control the contactor (30, 200, 300) based on a state of the battery module (10).

9. Use of the contactor according to any of claims 1-7 in the battery pack (1) according to claim 8.
